(19) Europäisches Patentamt / European Patent Office / Office européen des brevets

(11) **EP 3 206 933 B1**

## (12) EUROPÄISCHE PATENTSCHRIFT

(45) Veröffentlichungstag und Bekanntmachung des Hinweises auf die Patenterteilung:
**14.07.2021 Patentblatt 2021/28**

(21) Anmeldenummer: **15754139.2**

(22) Anmeldetag: **12.08.2015**

(51) Int Cl.:
**B61K 9/12** *(2006.01)*

(86) Internationale Anmeldenummer:
**PCT/EP2015/068537**

(87) Internationale Veröffentlichungsnummer:
**WO 2016/058727 (21.04.2016 Gazette 2016/16)**

(54) **ZUSTANDSDIAGNOSE VON SCHIENENFAHRZEUGRÄDERN**

STATE DIAGNOSIS OF RAIL VEHICLE WHEELS

DIAGNOSTIC DE L'ÉTAT DES ROUES D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2014 AT 507422014**

(43) Veröffentlichungstag der Anmeldung:
**23.08.2017 Patentblatt 2017/34**

(73) Patentinhaber: **Siemens Mobility Austria GmbH**
**1210 Wien (AT)**

(72) Erfinder:
• **KÄMPFER, Björn**
**8045 Graz (AT)**
• **WEBER, Franz-Josef**
**8054 Graz (AT)**

(74) Vertreter: **Deffner, Rolf**
**Siemens Mobility GmbH**
**Postfach 22 16 34**
**80506 München (DE)**

(56) Entgegenhaltungen:
EP-A1- 1 600 351      EP-A1- 1 614 602
WO-A2-2006/032648      DE-T1- 19 580 682

• **None**

**Beschreibung**

Technisches Gebiet

Die Erfindung betrifft ein Verfahren zur Zustandsdiagnose von Schienenfahrzeugrädern eines Schienenfahrzeugs. Darüber hinaus umfasst die vorliegende Erfindung eine zugehörige Vorrichtung zur Zustandsdiagnose von Schienenfahrzeugrädern.

Es ist generell bekannt, dass Schienenfahrzeugräder mit der Zeit einem natürlichen Verschleiß bzw. einer Schädigung und Abnutzung unterliegen, welche nur innerhalb bestimmter vordefinierter Betriebsbereiche akzeptabel ist. Werden die Grenzen dieser vordefinierten Betriebsbereiche bei einem Schienenfahrzeugrad erreicht, so ist eine Wartung bzw. Reprofilierung des Schienenfahrzeugrads, z.B. gemäß DIN EN 15313:2010 "Bahnanwendungen - Im Betrieb befindliche Radsätze - Instandhaltung der Radsätze im eingebauten oder ausgebauten Zustand" durchzuführen bzw. ist gegebenenfalls das gesamte Schienenfahrzeugrad zu tauschen.

Da die Schädigung und Abnutzung der Schienenfahrzeugräder in Art und Umfang sehr stark vom Betriebseinsatz abhängig sind, sind regelmäßige Kontrollen notwendig, um zu beurteilen, ob sich die Schienenfahrzeugräder in einem betriebsfähigen Zustand befinden. Diese Kontrollen sind teilweise mit sehr hohen Kosten verbunden, weshalb sie nur in dringlichen Fällen bzw. in vorgegebenen Intervallen (z. B. in vorgegebenen Zeitintervallen, oder nach vorgegebener Laufleistung) vollumfänglich durchgeführt werden. Seltene Kontrollen der Schienenfahrzeugräder führen jedoch zu einem erhöhten Risiko, dass ungeplante Instandhaltungsmaßnahmen durchgeführt werden müssen, wodurch die vollumfängliche Verfügbarkeit der Schienenfahrzeuge reduziert wird.

Üblicherweise wird dabei die Laufleistung der Schienenfahrzeugräder meist in Kilometer der gefahrenen Strecke (Längenmaß) und seltener in Zeiteinheiten (z.B. Betriebsstunden) gemessen und beurteilt, da die Betriebszustände der Fahrzeuge im Vergleich zu statischen Maschinen zu stark variieren. Die gefahrene Strecke hat sich dabei in der Praxis als sinnvolleres Vergleichskriterium erwiesen. Dementsprechend findet eine Vermessung der Radprofile beispielsweise nach jeweils 20.000 km statt.

Darüber hinaus muss nach jeder Kontrolle entschieden werden, ob das Schienenfahrzeugrad sich nicht nur in einem betriebsfähigen Zustand befindet, sondern auch, ob das Schienenfahrzeugrad bis zur nächsten Kontrolle in einem betriebsfähigen Zustand bleiben wird. Dies wird jedoch letztlich durch den Monteur aufgrund seiner Erfahrung und Erwartung beurteilt. Zu seltene Kontrollen können somit möglicherweise dazu führen, dass in späterer Folge zusätzlich unnötige Instandhaltungsmaßnahmen durchgeführt werden müssen, wodurch die Wirtschaftlichkeit gesenkt wird. Dabei verursachen die Radinstandhaltungskosten meist den größten Teil der gesamten Instandhaltungskosten an einem Fahrwerk eines Schienenfahrzeugs.

Dabei kann sich die Einschätzung des Monteurs aufgrund folgender, sich plötzlich ändernder Betriebsbedingungen (z.B. ein Fahrzeug wird nach einem Fahrplanwechsel auf ganz anderen Strecken eingesetzt) als falsch erweisen. Ein plakatives Beispiel dazu ist eine Universallokomotive, wie sie in großer Stückzahl in Europa eingesetzt wird. Diese zeigt normalerweise kaum einen Spurkranzverschleiß und erreicht Laufleistungen von durchaus über 200.000 km zwischen zwei Reprofilierungen. Die Vermessung der Radprofile, also auch die Beurteilung des Spurkranzverschleißes, findet alle 100.000 km statt. Dabei treten jedoch auch "Ausreißer" auf, bei denen einzelne Fahrzeuge einen speziellen Einsatz hatten, so dass sie aufgrund eines Spurkranzverschleißes gerade einmal ein Intervall von ca. 40.000 km erreichen und somit weniger als die Hälfte der Laufleistung von einer Reprofilierung bis zur ersten Vermessung. Derartige Ausreißer werden nur bei einer Sichtkontrolle entdeckt, wenn die Spurkränze erstaunlich viel Materialabtrag haben und deshalb eine "Sondervermessung" durchgeführt wird.

Hinzu kommen noch sogenannte "Einzelereignisse", welche auch zu plötzlichen Schäden führen können. Ein Beispiel sind Verbremser, die zu Flachstellen führen können. Bleiben sie unentdeckt, so können dadurch Folgeschäden entstehen, welche zusätzlich die Lebensdauer der Schienenfahrzeugräder und anderer Komponenten reduzieren.

Stand der Technik

Derzeit erfolgen die Kontrollen der Schienenfahrzeugräder durch Sichtprüfungen oder durch Messung verschiedener Kennwerte. Für die Messung der Kennwerte stehen manuell bediente mechanische Messsysteme, manuell bediente optische Messsysteme sowie automatische Messsysteme, welche im Gleis verlegt sind, zur Verfügung. Eine ausführliche Übersicht solcher automatischer Messsysteme ist in der Publikation von Georg Hauschild und Peter Neumann: "Automatische Zustandsdiagnose von Eisenbahnrädern mit dem System ARGUS", in ZEV+DET Glas, Ann. 124, Nr. 12 aus dem Jahr 2000 gegeben. Denkbar sind auch akustische Messsysteme für Flachstellen und Unrundheiten. Genauso können dynamische Kräfte in Vertikalrichtung und auch die Vertikalbeschleunigung am Achslager als Kriterium gemessen und beurteilt werden. Bei manchen Betreibern erfolgt auch eine regelmäßige Beurteilung durch einen Mitarbeiter, der mit dem Fahrzeug mitfährt, um zu sehen, wie sich das Fahrzeug allgemein verhält. Bei diesen Mitfahrten können z.B. auch Flachstellen und Unrundheiten erkannt werden.

Generell haben viele Messsysteme jedoch gemeinsam, dass für die Messung das Schienenfahrzeug einen vorgegebenen Prüfplatz anfahren muss, damit die Schienenfahrzeugräder in üblicherweise vordefinierten Intervallen vermessen bzw. geprüft werden können.

Grundsätzlich ließen sich für die Zustandsdiagnose von Schienenfahrzeugrädern zumindest optische Systeme in Schienenfahrzeugen verwenden, was bisher jedoch aus finanziellen Gründen und auch aus technologischen Gründen, da beispielsweise optische Systeme sehr empfindlich gegenüber Verschmutzung sind, nicht umgesetzt wurde, speziell da jedes Schienenfahrzeugrad ein eigenes Messsystem benötigen würde. Derzeitige Systeme zur Fahrwerksdiagnose decken bislang nur einzelne Teilaspekte direkt ab, zum Beispiel die Vermessung/Berechnung der Raddurchmesser, oder indirekt, zum Beispiel Messung der Instabilität bei Hohllauf der Räder oder der Flachstellen.

Flachstellen kann man meist nur indirekt über akustische Sensoren oder Vertikalkräfte bzw. -beschleunigungen erkennen, während bei den Raddurchmessern auch eine Berechnung mit verschiedenen Eingangsgrößen erforderlich ist, um auf die tatsächlich derzeit vorliegenden Raddurchmesser zu kommen. Im Gegensatz zu den Flachstellen erhält man dann jedoch ein Raddurchmesserwert in mm.

Bei den Methoden zur Flachstellendetektion, welche normgemäß über die Länge in mm der Flachstelle zu erfolgen hat, müssen dagegen Grenzen für das akustische Signal oder eben die dynamischen Kräfte (kN) oder Beschleunigungen (m/s$^2$) für jedes Messsystem individuell festgelegt werden.

Bei diesen Verfahren kann jedoch lediglich der Ist-Zustand der Schienenfahrzeugräder bestimmt werden. Eine Vorhersage ist nur mittels einer Extrapolation der bisherigen Messergebnisse auf Basis des bisherigen Betriebs der Schienenfahrzeugräder möglich. Falls sich der Betrieb der Schienenfahrzeugräder jedoch unerwartet ändert, beispielsweise dadurch, dass das Schienenfahrzeug eine neue Strecke zugeteilt bekommt, kann keine Vorhersage mehr getroffen werden bzw. ist die zuletzt getätigte Vorhersage falsch.

Ein Berechnungsmodell, welches die Berechnung des natürlichen Verschleißes der Radprofile zumindest offline, das bedeutet, nicht direkt am Schienenfahrzeug, und somit entweder stark zeitverzögert oder generell im Nachhinein, zulässt, wurde von Björn Olaf Kämpfer im Rahmen seiner Dissertation: "Modell des Verschleißverhaltens von Schienenfahrzeugrädern" an der Technischen Universität Graz im Jahre 2005 entwickelt. Dabei ist es jedoch nicht möglich, die Betriebszustände der Schienenfahrzeugräder oder die Strecken auf denen das Schienenfahrzeug fährt, laufend aktuell, sprich online, zu erfassen, woraus große Ungenauigkeiten in den Vorhersagen resultieren.

Aus dem Stand der Technik ist weiterhin die DE 195 80 682 T1 bekannt, in welcher eine Einrichtung zur Schadenserkennung für Räder von Schienenfahrzeugen bzw. Gleisen gezeigt ist, wobei Rotations- und Translationsgeschwindigkeiten der Räder und des Schienenfahrzeugs erfasst werden.

Die WO 2006/032648 A2 offenbart ferner eine Vorrichtung und ein Verfahren zur Ermittlung von Verschleiß eines Körpers auf Grundlage eines erfassten geometrischen Profils. Zur Profilerfassung sind laserbasierende Sensoren eingesetzt.

In der EP 1 600 351 A1 sind darüber hinaus ein Verfahren und eine Vorrichtung zur Erkennung von Schäden und gefährlichen Zuständen (z.B. erhöhte Temperaturen) für ein Schienenfahrzeug dargestellt.

Die EP 1 614 602 A1 zeigt weiterhin eine Vorrichtung zur Bestimmung von Zuständen eines Radsatzes für ein Schienenfahrzeug. Zur Verschleißbestimmung werden mittels eines Abstandssensors vertikale Abstände zwischen Spurkränzen und Schienen ermittelt.

Darstellung der Erfindung

Es ist daher eine Aufgabe der vorliegenden Erfindung, ein Verfahren zu schaffen, durch welches eine zuverlässige Vorhersage der nächsten durchzuführenden Wartung der Schienenfahrzeugräder in Abhängigkeit ihrer Belastungsform, dabei handelt es sich beispielsweise um das Zuggewicht oder die auftretenden Traktions- und Bremskräfte, getroffen werden kann. Darüber hinaus sollte die Möglichkeit gegeben sein zu jedem Zeitpunkt seit der letzten Wartung eine Aussage bzgl. des Zustands der Schienenfahrzeugräder treffen zu können. Diese Aufgabe wird durch ein Verfahren mit den Merkmalen des Anspruchs 1 gelöst. Auf diese Weise kann der absolute aktuelle Abnutzungswert ermittelt werden, also z.B. wie groß die Spurkranzdicke oder die Spurkranzhöhe aktuell ist. Die Erfindung erschöpft sich nicht darin, nur einen relativen Abnutzungswert anzugeben, also etwa nur anzugeben, um wieviel sich die Spurkranzdicke oder die Spurkranzhöhe unter der gegebenen Belastung ändert.

Die Erfindung besteht somit darin, eine Berechnung der Radschädigung für Schienenfahrzeugräder, die sich auf Schienenfahrzeugen befinden, in Abhängigkeit vom tatsächlichen Betrieb bzw. der abgefahrenen Strecke durchzuführen, ohne dass ein eigener Prüfplatz angefahren werden muss. Das heißt, das Schienenfahrzeug befindet sich in Betrieb, wenn die Messung mit dem Messsystem erfolgt. Die Berechnung des Abnutzungswertes kann mittels eines Rechners am Schienenfahrzeug erfolgen. Dabei ist es in einer alternativen Ausführungsform auch denkbar, dass auf den Schienenfahrzeugen nur gemessen wird und die Rohdaten (Messdaten = Belastungswerte) oder "Zwischendaten" an einen stationären Rechner außerhalb des Schienenfahrzeugs übermittelt werden, der dann die eigentliche Berechnung durchführt.

Mit anderen Worten ist ein Ziel der vorliegenden Erfindung auf die punktuellen Messungen nach gewissen Laufleistungen verzichten zu können und die betrieblichen Grenzen für die jeweiligen Schädigungsformen möglichst optimal ausnutzen zu können. Das Vermindern der Schädigungsform bzw. deren Beseitigung ist als weiterer Schritt zu betrachten, das betrifft z.B. die Planung bei der Drehbank oder es wäre auch möglich, dem Fahrzeugdisponenten Empfehlungen abzugeben, wie er das Fahrzeug zukünftig einsetzen soll, damit die Räder möglichst lange halten.

Hierbei kann es hilfreich sein, wenn eine aktuelle Position des Schienenfahrzeugs mit Hilfe eines Ortungs-/Kommunikationssystems in dem Schienenfahrzeug abgefragt wird.

Man kann tagesaktuell den Zustand der Schienenfahrzeugräder über ein Kommunikationssystem abfragen bzw. einer Leitstelle mitteilen. Das heißt, man kann den tagesaktuellen Zustand der Schienenfahrzeugräder nicht nur im Schienenfahrzeug, sondern auch in einer Leitstelle laufend aktuell anzeigen oder die Messwerte, beispielsweise mittels USB-Stick, Funkeinheit u.dgl., an eine Leitstelle übermitteln.

Sonderereignisse, beispielsweise in Form von Radstillständen, die während der Fahrt des Schienenfahrzeugs auftreten und zu Flachstellen der Räder führen, können ebenfalls erfasst werden. Häufig handelt es sich dabei um ein Blockieren der Räder beim Bremsen, welches beim Schienenfahrzeug allerdings Gleiten genannt wird, wobei das ABS beim Pkw bei den Schienenfahrzeugen als Gleitschutz bezeichnet wird. Das blockierende Rad rutscht beim Radstillstand über die Schiene und wird nur an einer Stelle abgenutzt. Hinzu kommt die Wärmeentwicklung, die einerseits Materialveränderungen (und entsprechende Folgeschäden) und andererseits auch das Aufschmelzen des Stahls verursachen kann. Somit ist die Grundvoraussetzung für Flachstellen, dass das Fahrzeug fährt und Bremskräfte auf die Räder wirken. Grundsätzlich ist jedoch auch eine thermische Schädigung möglich, wenn die Räder beim Antreiben durchdrehen, wobei zwar keine Flachstellen auftreten, sondern lediglich eine thermische Schädigung der Räder erfolgt.

Durch die Kenntnis des Zustands der Schienenfahrzeugräder ist es auch möglich, dass sich das Schienenfahrzeug selbstständig für eine Reprofilierung oder einen Radtausch bei einem Werkstättendisponenten anmeldet. Dabei ist es auch denkbar, dass eine Rangliste der Fahrzeuge erstellt wird, wodurch der Disponent darüber automatisch informiert wird, bei welchen Schienenfahrzeugen der Disponent als nächstes weitere Maßnahmen zu ergreifen hat.

Weiterhin wird die Aufgabe durch eine Vorrichtung nach Anspruch 14 gelöst.

Der Rechner kann etwa ein Computerprogrammprodukt aufweisen, welches ein Programm umfasst und direkt in den Speicher des Rechners ladbar sein, mit Programm-Mitteln, um alle Schritte des erfindungsgemäßen Verfahrens auszuführen, wenn das Programm vom Rechner ausgeführt wird.

In einer erfindungsgemäßen Ausführungsform wird der aktuelle Abnutzungswert an eine Verschleißdatenbank außerhalb des Schienenfahrzeugs gesendet. Hierbei umfasst die Verschleißdatenbank gegebenenfalls nicht nur die aktuellen Abnutzungswerte eines Schienenfahrzeugs, sondern auch die Abnutzungswerte einer ganzen Flotte von Schienenfahrzeugen. Dies hat den Vorteil, dass externe Stellen laufend auf die Verschleißdatenbank zugreifen bzw. diese abfragen können und so Informationen bzgl. des Zustands der Schienenfahrzeugräder bekommen, wodurch diese externen Stellen vorab erste Vorbereitungsmaßnahmen zur Wartung bzw. zum Radaustausch sowie zum weiteren Einsatz des Schienenfahrzeugs treffen können. Dabei können die Abnutzungswerte in der Verschleißdatenbank beispielsweise an einen Werkstättendisponenten oder Schienenfahrzeugdisponenten gesendet werden.

Somit kann aufgrund des berechneten Abnutzungs- bzw. Schädigungswerts eine Empfehlung an den Schienenfahrzeugdisponenten abgegeben werden, wie das Schienenfahrzeug aufgrund seines aktuellen Betriebszustandes am besten eingesetzt werden sollte, damit optimale Reprofilierungsintervalle erreicht werden können. Beispielsweise ist bei geraden Bahnstrecken mit einer breiter werdenden Spurkranzdicke zu rechnen, während diese bei bogenreichen Bahnstrecken abnimmt. Durch den regelmäßigen Tausch zwischen diesen beiden Einsatzgebieten kann somit die Spurkranzdicke innerhalb eines gewissen Toleranzbereichs konstant gehalten werden, so dass das Erreichen der minimalen oder maximalen Bereichsgrenze, im Fachjargon auch als Betriebsgrenzmaß gemäß DIN 27200 bezeichnet, für die Spurkranzdicke verzögert wird und das Schienenfahrzeugrad länger im Einsatz ist. Beispielsweise liegt das minimale Betriebsgrenzmaß für die Spurkranzhöhe bei einem Raddurchmesser größer 760 mm bei 27,5 mm und bei einem Raddurchmesser von 330 mm bis 760 mm bei 32 mm und in beiden Fällen bei einem maximalen Betriebsgrenzmaß von 36 mm. Diese Grenzwerte gelten für europäische, normalspurige Vollbahnen, für welche die EN 15313 gilt. Bei Bahnen mit anderer Spurweite, normalspurige Vollbahnen außerhalb Europas (z. B. USA oder China), Metros, Straßenbahnen etc. können andere Grenzwerte gelten, wobei das erfindungsgemäße Verfahren in gleicher Weise anwendbar ist.

Dabei reduziert eine automatisch generierte Benachrichtigung an den Werkstättendisponenten oder an den Triebfahrzeugführer bei Erreichen eines Betriebsgrenzmaßes bzw. bei Auftreten eines Sonderereignisses, beispielsweise einer Flachstelle, den Personalbedarf und somit die laufenden Kosten (durch Wegfall bzw. Reduzierung der laufenden Kontrollen). Außerdem können Folgeschäden, beispielsweise in Form von tiefgehenden Rissen als Folge von Flachstellen, vermieden werden. Durch eine automatische Benachrichtigung des Werkstättendisponenten wird ein optimaler Einsatz der Schienenfahrzeugräder ermöglicht, wodurch zusätzlich die Standzeiten der Räder erhöht werden. Dabei gilt es zu beachten, dass diese entgegen der herkömmlichen Begriffsbestimmung sich nicht auf ein Zeitmaß, sondern auf ein Längenmaß bezieht.

In einer erfindungsgemäßen Ausführungsform ist es auch möglich, dass basierend auf der Verschleißdatenbank Auswertungen mehrerer Abnutzungswerte durchgeführt werden, wobei die Auswertungen sich auf ein Schienenfahrzeug, einen Triebzug oder eine komplette Flotte von Schienenfahrzeugen beziehen können. Es können Verhältnisse zwischen unterschiedlichen Rädern berechnet werden, auftretende Schäden verglichen werden, es kann bestimmt werden, mit welcher Laufleistung die Schäden auftreten, oder wie der Schadensfortschritt ist.

Es kann vorgesehen sein, dass die Messungen, und vorzugsweise auch die zugehörigen Berechnungen, in einem vorgegebenen Zeitintervall in einem Bereich von 1 s bis 10 s, vorzugsweise 1 s bis 2 s, durchgeführt werden, wobei vorzugsweise ein echtzeitfähiges System vorliegt. Es ist damit zu rechnen, dass mit einer fortschreitenden Weiterentwicklung der Messsysteme die Berechnungszeiten weiter sinken. Grundsätzlich unterliegen die Zeitintervalle jedoch keiner Beschränkung und können von Tausendstel Sekunden (und weniger) bis Jahre liegen, je nach zu untersuchender Belastung.

Insbesondere ist es auch möglich, dass im Falle der Verwendung eines Wegintervalls ein Bereich von 1 m bis 100.000 km definiert wird, wobei in Abhängigkeit von der jeweiligen Belastungsform, welche auch von der zu befahrenden Strecke vorgegeben wird, das Wegintervall definiert wird. Grundsätzlich unterliegen die Wegintervalle jedoch keiner Beschränkung und können von Millimetern bis zu Millionen von Kilometern liegen, je nach zu untersuchender Belastung.

Dabei kann es sich bei den von den Messsystemen zu ermittelnden Belastungsformen neben dem Reibungskoeffizienten zwischen Schienenfahrzeugrad und Schiene um eine Fahrgeschwindigkeit und/oder ein Schienenfahrzeuggewicht und/oder eine Gleisüberhöhung und/oder einen Gleisbogenradius und/oder zumindest eine Traktions-/Bremskraft o.dgl. handeln. Selbstverständlich sind auch andere Belastungsformen denkbar und mit den genannten Belastungsformen kombinierbar.

Falls für die jeweils zu berücksichtigenden Belastungsformen Berechnungsmodelle verfügbar sind, die entsprechend rasch einen Abnutzungswert berechnen können, so ist es natürlich vorteilhaft, solche Berechnungsmodelle zu verwenden. Einige Beispiele für Berechnungsmodelle wurden eingangs genannt. Es kann jedoch für die Schnelligkeit der Bestimmung der Abnutzungswerte vom Vorteil sein, mit Hilfe von Berechnungsmodellen für bestimmte Belastungsformen und dabei wieder für bestimmte Belastungswerte entsprechende Abnutzungswerte vorab zu berechnen und abzuspeichern. Nach erfolgter Messung eines Belastungswerts am im Betrieb befindlichen Schienenfahrzeug kann dann der passende (= mit den entsprechenden Belastungswerten verknüpfte) Abnutzungswert ausgelesen und als tatsächlicher Belastungswert ausgegeben werden.

Das zur Durchführung des Verfahrens notwendige Berechnungsmodell kann zum Beispiel zumindest eine Look-up-Abnutzungswert als Ergebnis ausgegeben wird, der dem abgespeicherten Belastungswert zugeordnet ist.

Eine besonders einfache Berechnung des Abnutzungswertes ergibt sich, wenn das Berechnungsmodell unter Verwendung einer Look-up-Tabelle ferner folgende Schritte umfasst:

- Multiplikation der ermittelten Abnutzungswerte mit einem für die jeweilige Kombination von Belastungswerten vorgegebenen Häufigkeitsfaktor (insbesondere gemäß dem weiter unten erläuterten Betriebsprogramm bzw. den weiter unten erläuterten Einsatzbedingungen);
- Aufsummieren der Multiplikationswerte zu einem gesamten Abnutzungswert.

Diese Art der Berechnung entspricht einem Weg 1: Es wird zunächst nur die Häufigkeit der einzelnen Betriebszustände (also eines Belastungswerts oder einer Kombinationen von bestimmten Belastungswerten unterschiedlicher Belastungsformen) bezogen auf die Streckenlänge (oder ggf. der Zeit) ermittelt. Die Häufigkeitsfaktoren entsprechen im Wesentlichen dem Einfluss der einzelnen Belastungsformen auf die Gesamtbelastung und mit Hilfe der Aufsummierung lässt sich der gerade am Schienenfahrzeug vorliegende Abnutzungswert direkt ermitteln.

Beispiel: Von 100.000 km gefahrener Strecke wurden 20 % im Betriebszustand A, 15 % im Betriebszustand B usw. gefahren. Die Abnutzungswerte für die Schädigungen in der/den Look-up-Tabelle(n) werden dann aufgrund der prozentualen oder relativen Verteilung der Betriebszustände gewichtet und dann zu einem Gesamtergebnis aufkumuliert, welches auf die tatsächliche Gesamtlaufleistung, also 100.000 km, hochgerechnet wird.

Eine andere Berechnung des Abnutzungswertes sieht Weg 2 vor: Zwischen zwei Messungen werden die Betriebsbedingungen als konstant angenommen. Jetzt kann man sich aus der/den Look-up-Tabelle(n) den jeweiligen Schädigungswert für diesen Betriebszustand heraussuchen und auf die gefahrene Strecke bis zur nächsten Messung skalieren. Diesen Schädigungswert kann man dann zu einer Vorschädigung aufaddieren und den Prozess bei der nächsten Messung wiederholen.

Weg 3 stellt eine Kombination aus Weg 1 und Weg 2 dar: Man bestimmt für einen gewissen Zeitraum oder Wegstrecke (z.B. einen Tag) die relative Häufigkeit bezogen auf die gefahrene Wegstrecke. Im Anschluss berechnet man die Schädigung für diese Wegstrecke und addiert sie zur Vorschädigung. Diese dritte Variante ist vor allem dann interessant, wenn man weiß, dass das Fahrzeug gewisse Ruhepausen (z.B. nächtliche Betriebsruhe) hat, bei denen sichergestellt ist, dass genügend CPU-Zeit für komplexe Berechnungen vorhanden ist.

Dabei haben alle drei Wege gemeinsam, dass die Startwerte extern vorgegeben werden müssen. So kann beispielsweise die Spurkranzdicke nach einer Reprofilierung mit unterschiedlichen Werten hergestellt werden. Da das Berechnungsverfahren erst einmal nur die Änderung (in diesem Fall der Spurkranzdicke) ermittelt, wird der Startwert benötigt, um den aktuellen Absolutwert ermitteln zu können - dies kann selbstverständlich automatisch oder manuell erfolgen. Optional können die bei allfälligen Messungen des Betriebszustands der Räder berechneten Werte korrigiert werden.

Dabei ist eine Aufkumulierung nur bei Schädigungsformen notwendig, welche langsam voranschreiten (z.B. bei einem natürlichen Verschleiß). Bei Einzelereignissen (z.B. Flachstellen) reicht es aus, wenn einmal eine kritische Situation berechnet wird. Dann wird quasi ein Schalter umgelegt, von "Schaden (z.B. Flachstelle) nicht vorhanden" auf "Schaden vorhanden".

Zu Beginn bzw. nach der Reprofilierung der Schienenfahrzeugräder oder nach deren Tausch ist also eine Nullmessung eines Anfangsabnutzungsgrads der Schienenfahrzeugräder durchzuführen. Diese Nullmessung ist von dem Berechnungsmodell zu berücksichtigen bzw. wird von den Messwerten der Nullmessung weg die nachfolgende Berechnung der Verschleißwerte durchgeführt.

In gleicher Weise ist es möglich, dass das Berechnungsmodell ferner eine Zwischenmessung eines Anfangsabnutzungswerts der Schienenfahrzeugräder umfasst.

In einer weiteren Ausführungsform der Erfindung berücksichtigt das Berechnungsmodell zusätzlich zeitlich begrenzte Sonderereignisse des Schienenfahrzeugs. Bei diesen Sonderereignissen kann es sich beispielsweise um Radstillstände, welche während der Fahrt auftreten und Flachstellen am Radumfang verursachen, handeln.

Darüber hinaus können die durch die Messsysteme erhaltenen Daten zum Teil auch anderen Anwendungen zur Verfügung gestellt werden. So ist es beispielsweise möglich, dass mit Hilfe des Ortungssystems eine Spurkranzschmierung für die relevanten Streckenbögen durchgeführt wird, wodurch der Schmiermittelverbrauch gesenkt und gleichzeitig der Spurkranzverschleiß reduziert bzw. ermittelt wird. Darüber hinaus können auch Lastannahmen bzw. das maximal zulässige Gesamtgewicht validiert werden.

Ein Vorteil, welcher sich aus einer laufenden online Messung ergibt, ist, dass die Daten gleichzeitig aus einer Quelle vorliegen, so dass zu einem beliebigen Zeitpunkt bekannt ist, welche Fahrgeschwindigkeit, welcher Bogenradius und welche Schienenüberhöhung gleichzeitig auftreten.

Ein weiterer Vorteil ist, dass das Verfahren gemäß der vorliegenden Erfindung durch weitere Berechnungsmodelle, z.B. dem "RCF-Berechnungsmodell" für Räder von Adam Bevan: "Development of the Vehicle Track Interaction Strategic Model: WP1 - Development of the Wheel Profile Damage Model", RSSB T792, Stage 2 aus dem Jahre 2011, erweitert werden kann. Ebenso ist es möglich, dass andere in Zukunft entwickelte Berechnungsmodelle eingesetzt werden.

Basierend auf obigen Ausführungsformen ergibt sich der Vorteil, dass eine sonst übliche Vermessung und Sichtprüfung der Schienenfahrzeugräder entfallen kann bzw. diese nur noch in eingeschränktem Umfang durchzuführen ist. Dabei können die durch die Messsysteme gesammelten Daten auch für eine automatische Auswertung zur Verfügung gestellt werden.

Aufgrund der derzeitigen punktuellen Kontrolle der Schienenfahrzeugräder zu bestimmten Intervallen werden Instandhaltungsmaßnahmen aufgrund diverser Sicherheitsvorschriften häufig vor dem Erreichen der zulässigen Grenzmaße vorzeitig durchgeführt. Die kontinuierliche Diagnose ermöglicht hingegen eine bessere Ausnutzung des Verschleißvorrates und damit eine Verlängerung der Radstandzeiten.

Darüber hinaus wird durch die kontinuierliche Diagnose des Verschleißzustandes der Schienenfahrzeugräder die Instandhaltung bzw. Wartung der Schienenfahrzeugräder planbar, sodass auch die Verfügbarkeit gesteigert wird.

Kurzbeschreibung der Figuren

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Dabei zeigen:

Fig. 1 eine schematische Darstellung des prinzipiellen Zusammenspiels der einzelnen Verfahrensschritte zur Zustandsdiagnose von Schienenfahrzeugrädern sowie das Zusammenspiel zwischen Schienenfahrzeug und Leistelle(n) sowie

Fig. 2 eine prinzipielle Darstellung einer sechsdimensionalen Look-up-Tabelle.

Ausführung der Erfindung

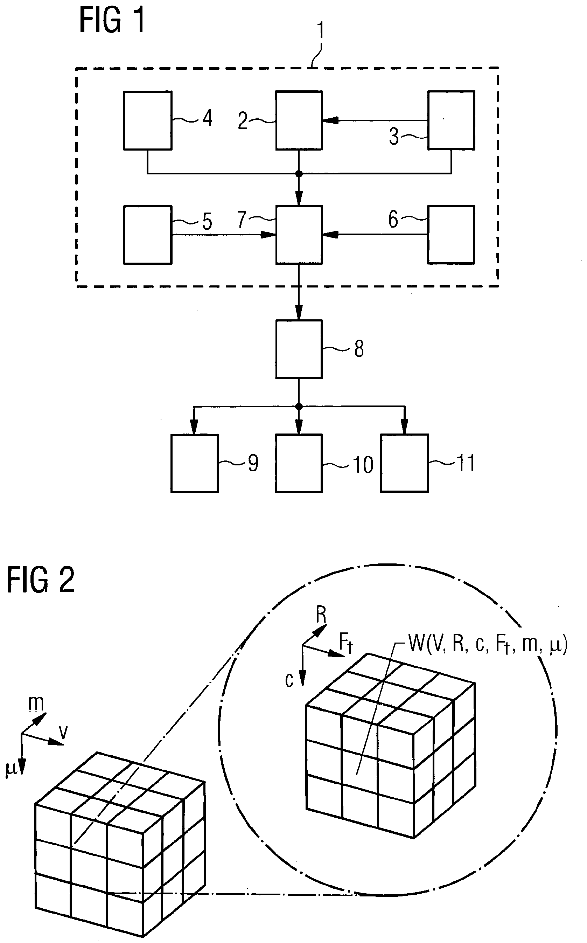

Die Grundidee der in Fig. 1 schematisch dargestellten Lösung ist die direkte Messung von Belastungswerten am Schienenfahrzeug 1 und daraus die Berechnung der für Schienenfahrzeugräder relevanten Abnutzungswerte direkt an einem Schienenfahrzeug 1 (oder an einem anderen Ort), wobei innerhalb eines vorgegebenen Intervalls zumindest ein Belastungswert einer Belastungsform der Schienenfahrzeugräder mit zumindest einem Messsystem 4 ermittelt und mit einem Berechnungsmodell 7 aus dem zumindest einen Belastungswert ein aktueller Abnutzungswert der Schienenfahrzeugräder berechnet wird. Bei dem zugehörigen Intervall handelt es entweder um ein Zeitintervall oder um ein Wegintervall.

Die berechneten Abnutzungswerte (Verschleißwerte) werden vorzugsweise an eine extern gelegene Verschleißdatenbank 8 außerhalb des Schienenfahrzeugs 1 übermittelt.

Basierend auf dieser Verschleißdatenbank 8 erfolgt eine Auswertung 10 des aktuellen Abnutzungswerts, um den Zustand der Schienenfahrzeugräder zu beurteilen und um gegebenenfalls Vergleichsstatistiken zwischen den Schienenfahrzeugrädern und ihren Belastungen sowie abzufahrenden Bahnstrecken erstellen zu können, wobei der Abnutzungswert in der Verschleißdatenbank 8 vorzugsweise an einen Werkstättendisponenten 9 oder einen Schienenfahrzeugdisponenten 11 gesendet wird, wobei gegebenenfalls eine automatische Anmeldung zur Instandhaltung und Wartung der Schienenfahrzeugräder erfolgt, wodurch Zeit und Kosten gespart werden. In gleicher Weise könnte eine automatische Benachrichtigung des Lokführers erfolgen, damit dieser gegebenenfalls sofortige Maßnahmen setzen kann, beispielsweise falls ein Weiterbetrieb gemäß den lokalen Vorschriften nicht möglich ist.

Falls die Abnutzungswerte an einen Schienenfahrzeugdisponenten 11 weitergeleitet werden, so besteht die Möglichkeit, dass dieser den weiteren Schienenfahrzeugeinsatz plant, da beispielsweise bei geraden Bahnstrecken mit einer breiter werdenden Spurkranzdicke zu rechnen ist, während die Spurkranzdicke bei bogenreichen Bahnstrecken abnimmt.

Beim hier in Fig. 1 gezeigten Ausführungsbeispiel sind die Datenbank 2, das Ortungs-/Kommunikationssystem 3, das Messsystem 4, ein Speicher für Sonderereignisse 5, ein Speicher für Nullmessungen 6 sowie das Berechnungsmodell 7 am Schienenfahrzeug 1 vorgesehen. Die Verschleißdatenbank 8 und die Auswertung 10 sind jedoch nicht am Schienenfahrzeug angeordnet. Das Ortungs-/Kommunikationssystem 3 sowie das Messsystem 4 müssen am Schienenfahrzeug angeordnet sein. Die Aufteilung, welche der übrigen genannten Systemkomponenten am Schienenfahrzeug und welche nicht am Schienenfahrzeug angeordnet sind, ist nicht wesentlich für die Ausführung der Erfindung. So könnten etwa die Verschleißdatenbank 8 und/oder die Auswertung 10 auch am Schienenfahrzeug 1 vorgesehen sein. Die Ergebnisse der Auswertung könnten dann am Schienenfahrzeug ausgegeben werden, z. B. auf einem Display. Genauso wäre es möglich, die Datenbank 2 und das Berechnungsmodell 7 offline, also nicht am Schienenfahrzeug 1, zu haben. Das Schienenfahrzeug 1 würde dann einfach nur messen und die Messdaten in irgendeiner Form (z.B. per Funk) auf einen stationären Rechner übermitteln, der über die Datenbank 2 verfügt und die eigentlichen Berechnungen durchführt. Das Ergebnis der Berechnungen könnte dann - auch - an das Schienenfahrzeug 1 übermittelt werden.

Jedenfalls wird mit dem direkt oder indirekt am Schienenfahrzeug 1 während dem regulären Betrieb laufend durchzuführenden Verfahren der Zustand von den Schienenfahrzeugrädern abgefragt, wobei gegebenenfalls eine aktuelle Position eines Schienenfahrzeugs 1 mit Hilfe eines Ortungs-/Kommunikationssystems 3 in dem Schienenfahrzeug 1 abgefragt wird. Ein Ortungs- bzw. Kommunikationssystem 3 unterstützt dabei gegebenenfalls das erfindungsgemäße Verfahren bei der Zuordnung der vorgefunden Abnutzung zu den Betriebsbedingungen und hilft bei der Disposition.

Eine Datenbank 2 sollte hierbei Trassierungsinformationen wie Bogenradius und Gleisüberhöhung über die Wegstrecke enthalten. Zusammen mit der Ortung wäre es dann möglich, diese Größen entsprechend direkt zu erfassen, wobei es in einer alternativen Ausführungsform möglich ist, diese Größen über eine so genannte Inertialplattform bzw. einem Querbeschleunigungssensor, welcher direkt auf dem Fahrzeug angeordnet ist, direkt zu messen, so dass ein Ortungs- bzw. Kommunikationssystem 3 nicht zwingend erforderlich ist.

Die Fahrgeschwindigkeit wird üblicherweise über die normale Bordelektronik ermittelt, wobei gegebenenfalls diverse Alternativen zur Verfügung stehen. Das gleiche gilt für das Antriebs- und Bremsmoment des Motors, das in eine Kraft zwischen Rad und Schiene umgerechnet wird, wobei bei einer pneumatischen Bremse dies über den Bremszylinderdruck erfolgt.

Als Ortungssystem ist jedes beliebige geeignete System, beispielsweise in Form von GPS, einsetzbar. Ein System, welches in der Zugsicherungstechnik verwendet wird, basiert beispielsweise darauf, dass im Gleis Wegmarken, sogenannte Balisen, verlegt sind, welche dem Fahrzeug die aktuelle Position mitteilen. Zwischen zwei Balisen ortet sich das Fahrzeug dann selbst über die gefahrene Wegstrecke.

Zur Datenübertragung wird im einfachsten Fall das normale Mobilfunknetz genutzt, wobei gegebenenfalls diverse Alternativen, beispielsweise in Form eines USB-Stick, zur Verfügung stehen.

Wesentlich beim erfindungsgemäßen Verfahren ist jedoch, dass je nachdem, welche Belastungen tatsächlich im Betrieb auftreten, unterschiedliche Schadensformen relevant werden. Diese Vorgehensweise hat den Vorteil, dass je nach Bedarf und Wissenszuwachs beliebig viele Schädigungsmodelle verwendet, ergänzt oder auch ausgetauscht werden können, so dass das erfindungsgemäße Verfahren grundsätzlich offen ist.

Die Rissbildungen der Rollkontaktermüdung (RCF) entsprechen dabei in einem gewissen Maße dem natürlichen Verschleiß. Dabei sind Aufschweißungen in der Regel eine Folge von Flachstellen, wobei in den Tabellen, genauer gesagt den Look-up-Tabellen, die berechnete Temperatur im Rad-Schiene-Kontakt für den jeweiligen Betriebszustand vermerkt ist. Da es sich hierbei um singuläre Ereignisse handelt, die relevant sind, reicht eine einmalige Überschreitung der kritischen Temperatur aus, um einen Schaden zu erzeugen, weshalb ein Vermerk getätigt werden muss, dass jetzt ein Schaden vorhanden ist.

Dahingehend zeigt nachfolgende Tab. 1 eine vereinfachte zweidimensionale Look-up-Tabelle bzgl. Geschwindigkeit und Bogenradius, zu denen jeweils der zugehörige Abnutzungswert pro Längeneinheit für eine Kombination dieser zwei Belastungsformen eingetragen ist. Dabei ist zusätzlich in Klammer die zugehörige Häufigkeitsverteilung P in Prozent vermerkt, dies entspricht somit obig erläutertem Weg 1.

| Geschwindig-keit (V) / Bogen-radius (R) | 10 km/h | 30 km/h | 40 km/h | 50 km/h | 60 km/h |
|---|---|---|---|---|---|
| 100 m | 6 (5%) | ...... . | ...... . | 30 (60%) | ...... . |
| 400 m | ...... . | ...... . | ...... . | | |
| 700 m | 10 (20%) | ...... . | | 17 (15%) | |
| ... | ...... . | | | | |

Tab. 1: Zwei-dimensionale Look-up-Tabelle

Wichtig dabei ist, dass die Summe der %-Werte für eine bestimmte Strecke immer 100% ergibt, wobei sich bei einem anderen Betriebseinsatz auf einer anderen Strecke natürlich andere Prozentwerte ergeben.

Die Gesamtschädigung Wges pro Streckenlänge ergibt sich dann aus folgender Formel:

$$Wges = Summe\ [W\ *\ P] \qquad\qquad (1)$$

$$Wges = [6*0,05] + [30*0,3] + [10*0,2] + [17*0,15] = 13,85 \quad (2)$$

Da dieser Gesamtschädigungswert Wges immer noch relativ zur Streckenlänge gilt, muss er noch mit der gefahrenen Gesamtstrecke multipliziert werden, was dann der Veränderung der Schädigung entspricht, die während der Fahrt auf dieser Gesamtstrecke auftritt, wobei diesem Wert im Anschluss noch der Wert der Nullmessung, im Prinzip der Vorschädigung oder des Ausgangswerts, hinzugerechnet werden muss.

Beim obig erläuterten Weg 2 ist die Tabelle mit W-Werten für die Schädigung identisch. Es wird jedoch zu einer beliebigen Messung nachgesehen, in welchem Feld der Schädigungstabelle man sich befindet (z.B. R = 700m; V = 10km/h) über den dann jeweiligen Schädigungswert (Abnutzungswert, in diesem Fall W(R = 700m; V = 10km/h) = 10) und zu der gefahrenen Strecke bis zur nächsten Messung wird dann die inkrementelle Schädigung ermittelt, wobei die Vorschädigung noch aufkumuliert wird. Bei der nächsten Messung wird dann analog vorgegangen.

In der Realität ist die Look-up-Tabelle jedoch nicht zweidimensional sondern z.B. sechsdimensional, das heißt, es werden sechs Belastungsformen und deren gegenseitige Beeinflussung berücksichtigt. Eine prinzipielle Darstellung einer sechs-dimensionalen Look-up-Tabelle ist dabei in Fig. 2 dargestellt.

Dabei steht der Faktor "W" stellvertretend für die Schädigungs- bzw. Abnutzungswerte je nach eingesetztem Berechnungsmodell. Die anderen Buchstaben sind die nachfolgenden sechs Einflussfaktoren, bei welchen es sich zumindest um die von einen Messsystem 4 zu ermittelnden Belastungsformen handelt, z.B. um eine Fahrgeschwindigkeit und/oder ein Schienenfahrzeuggewicht und/oder eine Gleisüberhöhung und/oder einen Gleisbogenradius und/oder einen Reibungskoeffizienten zwischen Schienenfahrzeugrad und Schiene und/oder zumindest eine Traktions-/Bremskraft. Dabei können mit steigenden Anforderungen an das Gesamtsystem auch noch weitere Belastungsformen, wie beispielsweise eine Querbeschleunigung im Bogen, berücksichtigt werden.

Die Häufigkeitsfaktoren kommen aus dem tatsächlichen Betrieb und geben die Häufigkeit (als Anteil der gefahrenen Strecke) an, wie sie bei einer Kombination von den sechs Größen auftritt. Dabei entsteht eine sechs-dimensionale Tabelle, in der anstatt der Schädigungswerte die Häufigkeitsfaktoren genannt sind.

Üblicherweise liegt das vorgegebene Zeitintervall, in dem die Messungen und Berechnungen durchgeführt werden, in einem Bereich von 1 s bis 10 s, vorzugsweise 1 s bis 2 s, wobei gegebenenfalls ein echtzeitfähiges System vorliegt. Dabei gilt es auch zu berücksichtigen, dass das in gleicher Weise einsetzbare Wegintervall einen Bereich von 1 m bis 100.000 m umfasst, wobei natürlich vorzugsweise ebenfalls ein echtzeitfähiges System vorliegt. Selbstverständlich sind diese Bereichsangaben von dem eingesetzten Messsystem 4 der zum Verfahren zugehörigen Vorrichtung und von der Geschwindigkeit der eingesetzten Übertragungsmittel abhängig, weshalb basierend auf weiteren Entwicklungen in diesen Bereichen auch eine Echtzeitfähigkeit erzielt werden kann.

Theoretisch wäre es natürlich noch möglich, die erforderlichen obig erläuterten Größen beliebig zu erweitern, beispielsweise eine Kontaktgeometrie zwischen Rad-Schiene (die so genannte äquivalente Konizität) oder auch die Spurweite. Außerdem wären Messsysteme zu den Wetterdaten zur Ermittlung des Reibungskoeffizienten zwischen Rad und Schiene denkbar. Dabei wäre auch eine Messung des Schlupfes bzw. der Schlupfgeschwindigkeit zwischen Rad und Schiene denkbar.

Generell gilt als einfachste Variante zur Ermittlung der Fahrgeschwindigkeit eine Berechnung basierend auf der Drehzahl der Räder und deren Durchmesser. Wenn allerdings Zug-/Bremskräfte übertragen werden, so ergibt sich dabei automatisch ein Fehler, weil die Kräfte nur bei einem leichten Durchrutschen der Räder (so genannter Schlupf bzw. Schlupfgeschwindigkeit) übertragen werden können. Im Extremfall ist dies das Blockieren der Räder beim Bremsen bzw. Schleudern beim Anfahren. Diese Fehler müssen ggf. korrigiert werden. Oftmals gibt es auch eine ungebremste Referenzachse, die dann das Geschwindigkeitssignal für den gesamten Triebzug liefert. Dabei sind jedoch grundsätzlich auch andere Geschwindigkeitsmesssysteme, beispielsweise in Form eines Radars möglich.

Im Allgemeinen ist das Leergewicht des Fahrzeugs bekannt, so dass man nur die Zuladung ermitteln muss. Bei einer beladungsabhängigen Bremse (z.B. bei einem Güterwagen) kann auch diese Information verwendet werden, was dann allerdings zumeist nur einer sehr groben Annäherung entspricht. Manche Fahrzeuge (z.B. Metros oder U-Bahnen) haben an den Türen automatische Fahrgastzählsysteme, so dass man unter Annahme eines Durchschnittsgewichts des Fahrgastes auch die Beladung berechnen kann. Eine weitere Variante ist die Verwendung von Luftfedern zum Schließen der Türen bei einem (statischen) Druck, da dieser von der Beladung abhängig ist, wobei sich zwischen zwei Türöffnungen der Beladungszustand der Fahrzeuge nicht ändern sollte. Im einfachsten Fall nimmt man die Erfahrungswerte vom Betreiber über das Fahrgastaufkommen, wobei dies dann abhängig von der Tageszeit und dem jeweiligen Streckenabschnitt sein müsste, wozu man sowohl eine Uhr als auch ein Ortungssystem benötigt und in der Datenbank müssten auch die Beladungswerte hinterlegt sein. Denkbar sind auch Messstellen im Gleis, von denen dann das Ergebnis an das Fahrzeug übertragen wird.

Bei Lokomotiven ist beispielsweise die Zuladung eher irrelevant, weil die Masse des Fahrers meist (in Bezug auf das Gesamtgewicht) nicht nennenswert variiert. Eine Ausnahme sind eventuell Dieselloks, bei denen die Masse des Dieselöls eventuell doch einen nennenswerten Anteil ausmacht. Hier kann aber auf die Füllstandsüberwachung zurückgegriffen werden. Bei dem erfindungsgemäßen Verfahren stehen grundsätzlich zwei verschiedene Varianten zur Abfrage der aktuellen Position innerhalb eines bestimmten Intervalls zur Verfügung:

Variante 1:

Das Fahrzeug verfügt über ein Ortungssystem und eine Datenbank bzw. Streckdatenbank, in der die Trassierungsdaten in Form von Bogenradius und Überhöhung in Abhängigkeit vom Streckenverlauf hinterlegt sind. Durch Abgleich des Ortungssignals mit der Streckendatenbank wird dann der jeweils aktuelle Wert von Bogenradius und Überhöhung herausgesucht. Dafür benötigt man eine kontinuierliche Ortung und ggf. mehrere unabhängige Ortungssysteme, wobei diese Variante nur auf bekannten Strecken funktioniert.

Eine Untervariante dazu ist die Verwendung von einer Satellitenortung, wobei der Verlauf des Ortungssignals auch zur Berechnung des Bogenradius verwendet werden kann. Dabei kann ggf. auch ein selbstlernendes System eingesetzt werden, bei dem sich das Fahrzeug merkt, auf welchen Strecken es schon einmal unterwegs war und wie die Bogenradien auf diesen Strecken verlaufen, wodurch das Fahrzeug eine eigene Streckendatenbank anlegt. Theoretisch könnten diese Informationen die Schienenfahrzeuge auch über ein Kommunikationssystem untereinander austauschen.

Variante 2:

Es ist aber auch möglich, beispielsweise den Bogenradius über eine Inertialplattform zu ermitteln. Solch eine Inertialplattform wäre dann direkt auf dem Fahrzeug montiert und man bräuchte weder ein Ortungssystem noch eine Streckendatenbank, zumindest nicht für diesen Zweck. Wenn man die Fahrgeschwindigkeit und den Bogenradius kennt, lässt sich somit die Gleisüberhöhung auch über die so genannte Querbeschleunigung berechnen, so dass man zusätzlich noch die Querbeschleunigung am Fahrzeug messen muss. Das erfolgt über eine Bewegungsgleichung einer kreisförmigen Bewegung, wobei die Überhöhung die Zentripetalbeschleunigung ausgleichen soll.

Das erfindungsgemäße Berechnungsmodell 7 umfasst somit eine Look-up-Tabelle, welche Abnutzungswerte für verschiedene Belastungsformen beinhaltet, wobei mit Hilfe des Berechnungsmodells 7 nachfolgende Berechnungsschritte ausgeführt werden:

- Messung eines Belastungswerts zumindest einer Belastungsform an dem Schienenfahrzeug innerhalb des vorgegebenen Intervalls;
- Bestimmung des tatsächlichen Abnutzungswerts für die gemessene/n Belastungsform/en, vorzugsweise innerhalb des vorgegebenen Intervalls, aus der Look-up-Tabelle.

Da das Schienenfahrzeug zumeist nicht exakt z.B. eine der in der Look-up-Tabelle angegebenen Geschwindigkeiten fährt, muss zur exakten Berechnung des tatsächlichen Abnutzungswerts zwischen den beiden Geschwindigkeitsangaben, zwischen denen sich die derzeit vorliegende Geschwindigkeit befindet, eine Interpolation durchgeführt werden.

Im Detail sollte zwischen den Werten der Belastungsformen interpoliert und danach erst der Abnutzungswert in Abhängigkeit der Geschwindigkeit und somit ebenfalls aus einer Interpolation folgend berechnet werden. Vorzugsweise jedoch erfolgt eine Zuordnung zwischen zwei Werten einer Belastungsform, wobei es eine Grenze gibt. Alles, was ober der Grenze ist, wir dem größeren Wert zugeordnet und alles, was kleiner ist, wird dem kleineren Wert zugeordnet.

Die aus der Look-up-Tabelle für die einzelnen Belastungsformen ausgelesenen Abnutzungswerte können in weiterer Folge derart analysiert werden, dass beispielsweise der maximale Abnutzungswert gewählt und dem Werkstättendisponenten 9 oder dem Schienenfahrzeugdisponenten 11 in weiterer Folge über die Verschleißdatenbank 8 mitgeteilt wird. Auch ist es möglich, dass, wenn der maximale Abnutzungswert einer Belastungsform auftritt, gemäß obiger Erläuterung zur Spurkranzdicke, die Bahnstrecke gewechselt und so die Lebensdauer erhöht wird.

Des Weiteren kann das Berechnungsmodell 7 ferner folgende Berechnungsschritte umfassen:

- Multiplikation der ermittelten Abnutzungswerte mit einem für die jeweilige Kombination von Belastungswerten vorgegebenen Häufigkeitsfaktor;
- Aufsummieren der Multiplikationswerte zu einem gesamten Abnutzungswert.

Die Häufigkeitsfaktoren werden vorab mit Hilfe diverser Testläufe ermittelt oder aber basieren auf Erfahrungswerten bzw. Expertenwissen. Im Detail entsprechen diese Häufigkeitsfaktoren sogenannten Einflussfaktoren, und zwar, welche Belastungsform welchen Einfluss auf den Abnutzungswert bzw. den Schädigungswert aufweist. Mit anderen Worten sollen die Häufigkeitsverteilungen den tatsächlichen Betrieb abbilden.

Damit der Abnutzungswert bzw. der Schädigungswert effektiv berechnet werden kann, muss zur Beginn eine Nullmessung 6 durchgeführt werden, dabei wird der Anfangsabnutzungsgrad der Schienenfahrzeugräder, beispielsweise nach der Reprofilierung, gemessen und im Anschluss dem Berechnungsmodell 7 mitgeteilt. Dabei kann in gleicher Weise das erfindungsgemäße Verfahren auch eine Zwischenmessung eines Abnutzungswerts der Schienenfahrzeugräder umfassen. Optional ist es hierbei natürlich auch möglich, durch zusätzliche Messungen den berechneten Wert zu korrigieren und durch eine neue Nullmessung zu ersetzen.

In einer weiteren erfindungsgemäßen Ausführungsform ist es möglich, dass das Berechnungsmodell 7 zusätzlich zeitlich begrenzte Sonderereignisse 5 des Schienenfahrzeugs 1 berücksichtigt. Bei diesen Sonderereignissen 5 handelt es sich beispielsweise um Radstillstände, welche während der Fahrt auftreten und Flachstellen umfangsseitig am Schienenfahrzeugrad verursachen.

Zur Durchführung des obig beschriebenen und in wesentlichen Zügen in Fig. 1 dargestellten Verfahrensschritt ist eine Vorrichtung zur Zustandsdiagnose von Schienenfahrzeugrädern notwendig. Diese Vorrichtung umfasst einen Rechner sowie gegebenenfalls ein Geschwindigkeitsmesssystem. Darüber hinaus umfasst die Vorrichtung zumindest ein Messsystem 4 zur Messung zumindest einer weiteren Belastungsform.

In Fig. 1 ist ersichtlich, dass sämtliche Informationen des zumindest einen Messsystems 4, des Ortungs-/Kommunikationssystems 3 sowie Informationen bzgl. der anfänglichen Nullmessung 6 und gegebenenfalls Informationen bzgl. auftretender Sonderereignisse 5 dem Berechnungsmodell 7 zur Verfügung gestellt werden, um den Abnutzungswert an den Schienenfahrzeugrädern direkt während des Betriebs des Schienenfahrzeugs 1 zu berechnen.

Bezugszeichenliste:

1 Schienenfahrzeug
2 Datenbank
3 Ortungs-/Kommunikationssystem
4 Messsystem
5 Sonderereignisse
6 Nullmessung
7 Berechnungsmodell
8 Verschleißdatenbank
9 Werkstättendisponent
10 Auswertung
11 Schienenfahrzeugdisponent

**Patentansprüche**

1. Verfahren zur Zustandsdiagnose von Schienenfahrzeugrädern eines Schienenfahrzeugs (1), wobei innerhalb eines vorgegebenen Zeitintervalls oder Wegintervalls zumindest ein Belastungswert einer Belastungsform der Schienenfahrzeugräder mit zumindest einem Messsystem (4) ermittelt und mit einem Berechnungsmodell (7) aus dem zumindest einen Belastungswert, sowie aus einer Nullmessung (6) oder einer Zwischenmessung eines Anfangsabnutzungswerts, ein aktueller Abnutzungswert der Schienenfahrzeugräder bestimmt wird, wobei die Belastungsform einen Reibungskoeffizienten zwischen Schienenfahrzeugrad und Schiene umfasst.

2. Verfahren nach Anspruch 1, **dadurch gekennzeichnet, dass** eine aktuelle Position eines Schienenfahrzeugs (1) mit Hilfe eines Ortungs-/Kommunikationssystems (3) in dem Schienenfahrzeug (1) abgefragt wird.

3. Verfahren nach einem der vorstehenden Ansprüche, **dadurch gekennzeichnet, dass** der aktuelle Abnutzungswert an eine Verschleißdatenbank (8) außerhalb des Schienenfahrzeugs (1) gesendet wird.

4. Verfahren nach Anspruch 3, **dadurch gekennzeichnet, dass** der Abnutzungswert in der Verschleißdatenbank (8) an einen Werkstättendisponenten (9) gesendet wird.

5. Verfahren nach Anspruch 3 oder 4, **dadurch gekennzeichnet, dass** basierend auf der Verschleißdatenbank (8) Auswertungen (10) mehrerer Abnutzungswerte durchgeführt werden.

6. Verfahren nach einem der vorstehenden Ansprüche, **dadurch gekennzeichnet, dass** der Abnutzungswert in der Verschleißdatenbank (8) an einen Schienenfahrzeugdisponenten (11) gesendet wird.

7. Verfahren nach Anspruch 1, **dadurch gekennzeichnet, dass** das vorgegebene Zeitintervall einen Bereich von 1 s bis 10 s, vorzugsweise 1 s bis 2 s, umfasst.

8. Verfahren nach Anspruch 1, **dadurch gekennzeichnet, dass** das vorgegebene Wegintervall einen Bereich von 1 m bis 100.000 km umfasst.

9. Verfahren nach einem der vorstehenden Ansprüche, **dadurch gekennzeichnet, dass** die von den Messsystemen (4) zu ermittelnden Belastungsformen eine Fahrgeschwindigkeit und/oder ein Schienenfahrzeuggewicht und/oder eine Gleisüberhöhung und/oder einen Gleisbogenradius und/oder zumindest eine Traktions-/Bremskraft und/oder eine Querbeschleunigung im Bogen umfassen.

10. Verfahren nach einem der vorstehenden Ansprüche, **dadurch gekennzeichnet, dass** das Berechnungsmodell (7) zumindest eine Look-up-Tabelle mit Abnutzungswerten für verschiedene Belastungsformen für jeweils mehrere Belastungswerte pro Belastungsform umfasst, wobei mit Hilfe des Berechnungsmodells (7) nachfolgende Schritte ausgeführt werden:

    - Messung eines Belastungswerts zumindest einer Belastungsform an dem Schienenfahrzeug innerhalb des vorgegebenen Intervalls;
    - Bestimmung des tatsächlichen Abnutzungswerts für die gemessene/n Belastungsform/en, vorzugsweise innerhalb des vorgegebenen Intervalls, aus der Look-up-Tabelle.

**11.** Verfahren nach Anspruch 10, **dadurch gekennzeichnet, dass** das Berechnungsmodell (7) ferner folgenden Schritt umfasst:

- Bestimmung des tatsächlichen Abnutzungswerts durch Interpolation zwischen Abnutzungswerten der Look-up-Tabelle.

**12.** Verfahren nach Anspruch 10 oder 11, **dadurch gekennzeichnet,** das Berechnungsmodell (7) ferner folgende Schritte umfasst:

- Multiplikation der ermittelten Abnutzungswerte mit einem für die jeweilige Kombination von Belastungswerten vorgegebenen Häufigkeitsfaktor;
- Aufsummieren der Multiplikationswerte zu einem gesamten Abnutzungswert.

**13.** Verfahren nach einem der vorstehenden Ansprüche, **dadurch gekennzeichnet, dass** das Berechnungsmodell (7) ferner zeitlich begrenzte Sonderereignisse (5) des Schienenfahrzeugs (1) berücksichtigt.

**14.** Vorrichtung zur Zustandsdiagnose von Schienenfahrzeugrädern umfassend einen Rechner, wobei die Vorrichtung ferner zumindest ein Messsystem (4) zur Messung zumindest einer Belastungsform umfasst und wobei der Rechner so konfiguriert ist, dass er das Verfahren nach einem der Ansprüche 1 bis 13 ausführt.

**15.** Vorrichtung nach Anspruch 14, **dadurch gekennzeichnet, dass** die Vorrichtung ferner ein Ortungs-/Kommunikationssystem (3) umfasst.


**Claims**

**1.** Method for diagnosing the state of rail vehicle wheels of a rail vehicle (1), wherein, within a predefined time interval or route interval, at least one stress value of a form of stress on the rail vehicle wheels is ascertained using at least one measurement system (4), and a current deterioration value of the rail vehicle wheels is determined from the at least one stress value, as well as from a zero measurement (6) or an intermediate measurement of a starting deterioration value, using a calculation system (7), wherein the form of stress comprises a coefficient of friction between rail vehicle wheel and rail.

**2.** Method according to claim 1, **characterised in that** a current position of a rail vehicle (1) is queried with the aid of a positioning/communication system (3) in the rail vehicle (1).

**3.** Method according to one of the preceding claims, **characterised in that** the current deterioration value is sent to a wear database (8) outside the rail vehicle (1).

**4.** Method according to claim 3, **characterised in that** the deterioration value in the wear database (8) is sent to a workshop dispatcher (9).

**5.** Method according to claim 3 or 4, **characterised in that** evaluations (10) are performed for a plurality of deterioration values on the basis of the wear database (8).

**6.** Method according to one of the preceding claims, **characterised in that** the deterioration value in the wear database (8) is sent to a rail vehicle dispatcher (11).

**7.** Method according to claim 1, **characterised in that** the predefined time interval comprises a range of 1 s to 10 s, preferably 1 s to 2 s.

**8.** Method according to claim 1, **characterised in that** the predefined route interval comprises a range of 1 m to 100,000 km.

**9.** Method according to one of the preceding claims, **characterised in that** the forms of stress to be ascertained by the measurement systems (4) comprise a travel velocity and/or a rail vehicle weight and/or a track cant and/or a track bend radius and/or at least one traction/braking force and/or a lateral acceleration in the bend.

**10.** Method according to one of the preceding claims, **characterised in that** the calculation model (7) comprises at least one lookup table with deterioration values for various forms of stress for a plurality of stress values per form of stress in each case, wherein the following steps are carried out with the aid of the calculation model (7) :

  - measuring a stress value of at least one form of stress on the rail vehicle within the predefined interval;
  - determining the actual deterioration value for the measured form(s) of stress, preferably within the predefined interval, from the lookup table.

**11.** Method according to claim 10, **characterised in that** the calculation model (7) further comprises the following step:

  - determining the actual deterioration value by way of interpolation between deterioration values in the lookup table.

**12.** Method according to claim 10 or 11, **characterised in that** the calculation model (7) further comprises the following steps:

  - multiplying the ascertained deterioration values by a frequency factor that is predefined for the respective combination of stress values;
  - adding up the multiplication values to form an overall deterioration value.

**13.** Method according to one of the preceding claims, **characterised in that** the calculation model (7) further takes into consideration temporally restricted special events (5) of the rail vehicle (1).

**14.** Apparatus for diagnosing the state of rail vehicle wheels comprising a computer, wherein the apparatus further comprises at least one measurement system (4) for measuring at least one form of stress and wherein the computer is configured such that it carries out the method according to one of claims 1 to 13.

**15.** Apparatus according to claim 14, **characterised in that** the apparatus further comprises a positioning/communication system (3).

**Revendications**

**1.** Procédé de diagnostic de l'état des roues d'un véhicule ferroviaire (1), dans lequel, dans un intervalle de temps ou un intervalle de trajet prescrit, au moins une valeur de contrainte d'un type de contrainte des roues du véhicule ferroviaire est déterminée au moyen d'au moins un système de mesure (4) et une valeur d'usure instantanée des roues du véhicule ferroviaire est déterminée par un modèle de calcul (7) à partir de l'au moins une valeur de contrainte ainsi qu'à partir d'une mesure de point zéro (6) ou d'une mesure intermédiaire d'une valeur d'usure initiale, dans lequel le type de contrainte comprend un coefficient de frottement entre une roue du véhicule ferroviaire et un rail.

**2.** Procédé selon la revendication 1, **caractérisé en ce qu'**une position instantanée d'un véhicule ferroviaire (1) est interrogée à l'aide d'un système de localisation/communication (3) dans le véhicule ferroviaire (1) .

**3.** Procédé selon l'une des revendications précédentes, **caractérisé en ce que** la valeur d'usure instantanée est envoyée à une base de données d'usure (8) à l'extérieur du véhicule ferroviaire (1).

**4.** Procédé selon la revendication 3, **caractérisé en ce que** la valeur d'usure dans la base de données d'usure (8) est envoyée à un gestionnaire d'ateliers (9).

**5.** Procédé selon la revendication 3 ou 4, **caractérisé en ce que**, sur la base de la base de données d'usure (8), des évaluations de plusieurs valeurs d'usure sont effectuées.

**6.** Procédé selon l'une des revendications précédentes, **caractérisé en ce que** la valeur d'usure dans la base de données d'usure (8) est envoyée à un gestionnaire de véhicule ferroviaire (11).

**7.** Procédé selon la revendication 1, **caractérisé en ce que** l'intervalle de temps prescrit est compris entre 1 s et 10 s, de préférence entre 1 s et 2 s.

**8.** Procédé selon la revendication 1, **caractérisé en ce que** l'intervalle de trajet prescrit est compris entre 1 m et 100.000 km.

**9.** Procédé selon l'une des revendications précédentes, **caractérisé en ce que** les types de contrainte à déterminer par les systèmes de mesure (4) comprennent une vitesse de déplacement et/ou un poids de véhicule ferroviaire et/ou une surélévation de voie ferrée et/ou un rayon de courbure de voie ferrée et/ou au moins une force de traction/freinage et/ou une accélération transversale dans une courbe.

**10.** Procédé selon l'une des revendications précédentes, **caractérisé en ce que** le modèle de calcul (7) comprend au moins une table de référence comportant des valeurs d'usure pour différents types de contrainte, respectivement pour plusieurs valeurs de contraintes par type de contrainte, dans lequel les étapes suivantes sont exécutées à l'aide du modèle de calcul (7) :

- mesure d'une valeur de contrainte d'au moins un type de contrainte sur le véhicule ferroviaire dans l'intervalle prescrit,
- détermination de la valeur d'usure effective pour le(s) type(s) de contrainte mesuré(s), de préférence dans l'intervalle prescrit, à partir de la table de référence.

**11.** Procédé selon la revendication 10, **caractérisé en ce que** le modèle de calcul (7) comprend en outre l'étape suivante :

- détermination de la valeur d'usure effective par interpolation entre des valeurs d'usure de la table de référence.

**12.** Procédé selon la revendication 10 ou 11, **caractérisé en ce que** le modèle de calcul (7) comprend en outre les étapes suivantes :

- multiplication des valeurs d'usure déterminées par un facteur de fréquence prescrit pour la combinaison respective de valeurs de contrainte,
- addition des valeurs de multiplication pour obtenir une valeur d'usure totale.

**13.** Procédé selon l'une des revendications précédentes, **caractérisé en ce que** le modèle de calcul (7) prend en compte en outre des événements spéciaux (5) limités dans le temps du véhicule ferroviaire (1).

**14.** Dispositif de diagnostic de l'état des roues d'un véhicule ferroviaire comprenant un calculateur, dans lequel le dispositif comprend en outre un système de mesure (4) pour mesurer au moins un type de contrainte, et dans lequel le calculateur est configuré de manière à exécuter le procédé selon l'une des revendications 1 à 13.

**15.** Dispositif selon la revendication 14, **caractérisé en ce que** le dispositif comprend en outre un système de localisation/communication (3).

## FIG 1

## FIG 2

$W(V, R, c, F_t, m, \mu)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19580682 T1
- WO 2006032648 A2
- EP 1600351 A1
- EP 1614602 A1

**In der Beschreibung aufgeführte Nicht-Patentliteratur**

- **GEORG HAUSCHILD ; PETER NEUMANN.** Automatische Zustandsdiagnose von Eisenbahnrädern mit dem System ARGUS. *ZEV+DET Glas, Ann.,* 2000, vol. 124 (12
- Modell des Verschleißverhaltens von Schienenfahrzeugrädern. Technischen Universität, 2005
- RCF-Berechnungsmodell. *Development of the Vehicle Track Interaction Strategic Model: WP1 - Development of the Wheel Profile Damage Model,* 2011